# EUROPÄISCHE PATENTSCHRIFT

(11) **EP 3 452 182 B1**
(45) Veröffentlichungstag und Bekanntmachung des Hinweises auf die Patenterteilung: **22.09.2021**
(21) Anmeldenummer: 17724766.5
(22) Anmeldetag: 02.05.2017
(51) Int. Cl.: A63B 5/11, A63B 21/055

(54) **SEILHAKEN FÜR EINEN SEILRING EINER TRAMPOLINBESPANNUNG**
CABLE HOOK FOR A CABLE LOOP OF A TRAMPOLINE JUMPING SHEET
CROCHET DE CABLE POUR UNE BOUCLE DE CABLE D'UNE TOILE DE SAUT DE TRAMPOLINE

(30) Priorität: 02.05.2016 EP 16167861; 02.05.2016 EP 16167862
(43) Veröffentlichungstag der Anmeldung: 13.03.2019
(73) Patentinhaber: Angehrn AG Umformtechnik, 9113 Degersheim (CH)
(72) Erfinder: MEHR, Christian, 9533 Kirchberg (CH); BISANG, Erwin, 6331 Hünenberg (CH)
(74) Vertreter: Liebetanz, Michael
(86) Internationale Anmeldenummer: PCT/EP2017/060381
(87) Internationale Veröffentlichungsnummer: WO 2017/191113

(56) Entgegenhaltungen:
- EP-A1- 2 540 352
- WO-A1-03/059462
- CN-U- 204 543 368
- DE-A1-102015 006 831
- US-A- 2 916 746
- US-A1- 2013 316 876
- US-B1- 6 685 662

## Beschreibung

### TECHNISCHES GEBIET

Die vorliegende Erfindung betrifft einen Seilhaken nach dem Oberbegriff des Anspruchs 1, und einen Seilring für einen solchen Seilhaken.

### STAND DER TECHNIK

Das Befestigungssystem zur Befestigung bzw. Einspannung einer Schwungmatte am Rahmen eines Trampolins ist bestimmend für die Beständigkeit und insbesondere auch das Schwingungsverhalten des Trampolins im Gebrauch. Entsprechend ist es wichtig, ein optimales Befestigungssystem bereitzustellen. Aus der EP 2 540 352 ist bspw. ein Befestigungssystem bekannt geworden, welches elastische Seilringe aufweist, die jeweils über einen Seilhaken und ein am Seilhaken angreifendes Bandelement an der Schwungmatte befestigt sind. Die Seilhaken sind als Doppelhaken ausgebildet, wobei ein erstes Ende des Seilringes, d.h. ein Abschnitt des Seilringes, in einen ersten Aufnahmeraum des Doppelhakens eingehängt, der Seilring nach aussen und um einen Abschnitt des Trampolinrahmens zurück zum Seilhaken geschlungen und mit einem zweiten Ende des sich innerhalb des Trampolinrahmens befindlichen Seilringes in einen zweiten Aufnahmeraum dieses Seilhakens eingehängt wird. Der Seilhaken weist eine in Spannlage nach innen bezüglich des Trampolinrahmens ragende Lasche mit einem Schlitz am freien Endabschnitt auf, durch welchen Schlitz das Bandelement geführt ist. Das Bandelement ist mit dem gegenüberliegenden Ende an der Schwungmatte vernäht.

Der Seilring weist mindestens eine Stelle auf, an welcher das mindestens eine den Ring bildende Seilstück geschlossen ist. An dieser Verbindungsstelle ist der Ring typischerweise weniger elastisch, jedenfalls ändert sich dort das elastische Verhalten des Seilrings pro Ringabschnitt. Gemäss der EP 2 540 352 befindet sich diese Stelle nun regelmässig in einer der Zugstrecken des Seilringes, also in einem jener Seilringabschnitte, welche frei zwischen dem Rahmen und dem Seilhaken verlaufen, womit die Zugstrecken dieses Seilrings unterschiedliche elastische Eigenschaften aufweisen. Dies führt zu einer asymmetrischen Beanspruchung des Seilringes und damit zu einem frühzeitigen Verschleiss. Zudem ist diese Asymmetrie nachteilig für das Schwingungsverhalten der Schwungmatte im Gebrauch.

Die US 2013/316 876 A offenbart Seilhaken für ein Trampolin für den Einsatz von einem flexiblen Seilelement mit zwei Enden, wobei der Seilhaken Aufnahmen für die beiden freien Enden des flexiblen Seilelementes aufweist, die diese festhalten.

Die US 2,916,746 A beschreibt Seilringe aus nebeneinander liegenden Seilstücken, die an ihren freien Enden verbunden und mit einem Haken einen Trampolinrahmen mit einer Schweungmatte verbinden.

Die DE 10 2015 006 831 A1 zeigt ein Tampolin mit stiftförmigen Seilhaken zur Aufnahme von einer Flachschlaufe für das Tempolintuch, wobei Seilringe mit übereinanderliegenden freien zusammengeklammerten Enden entlang dem stiftförmigen Seilhaken eingehängt sind.

### DARSTELLUNG DER ERFINDUNG

Es ist eine Aufgabe der vorliegenden Erfindung Mittel anzugeben, die eine verbesserte Einspannung einer Schwungmatte in einen Trampolinrahmen erlauben.

Diese Aufgabe wird durch einen Seilhaken mit den Merkmalen des Anspruchs 1 bzw. des Anspruchs 3 gelöst. Der Seilhaken kann dabei als Einzelhaken mit genau einem Aufnahmeraum für beide Enden des Seilringes oder als Mehrfachhaken, insbesondere als Doppelhaken mit jeweils einem Aufnahmeraum pro Ende des Seilringes, ausgebildet sein.

Die Verbindungsstelle wird durch die Fixiereinrichtung im entsprechenden Aufnahmeraum gegen eine Bewegung in Seilrichtung, eine seitliche Bewegung, gehalten. Die Fixiereinrichtung weist entweder mindestens einen am Aufnahmeabschnitt angebrachten und in den Aufnahmeraum ragenden Vorsprung auf, welcher ausgebildet und angeordnet ist, um in die mindestens eine Verbindungsstelle einzugreifen, vorzugsweise von innerhalb des Seilringes; oder sie umfasst mindestens ein Seitenführungselement, welches an einem seitlichen Rand des Übergangsabschnittes, angebracht ist und die mindestens eine Verbindungsstelle von ausserhalb oder innerhalb des Seilringes kontaktiert.

Der Ausdruck "*Seilrichtung*" meint die Richtung des betreffenden Seilabschnittes bezüglich des Seilringes. In anderen Worten: Die Fixiereinrichtung ist ausgebildet und angeordnet, um die bei sich in Spannlage befindlichem Seilhaken während des bestimmungsgemässen Gebrauchs des Seilhakens mindestens eine Verbindungsstelle gegen Verrücken in Umfangsrichtung eines Abschnitts der Schwungmatte, an welchem der Seilhaken befestigt ist, zu halten.

Diese Fixiereinrichtung kann in dem mindestens einen Aufnahmeraum und/oder ausserhalb davon angeordnet sein. Die Zentrierung, Stützung, Fixierung der Verbindungsstelle im entsprechenden Aufnahmeraum wird durch Kontaktierung des Seilringes mit einem oder mehreren Elementen der Fixiereinrichtung erzielt. Die Fixiereinrichtung umfasst also ein oder mehrere Elemente, welche im mindestens einen Aufnahmeraum und/oder ausserhalb davon am Seilhaken angeordnet sind. Weist der Seilhaken mehrere Aufnahmeräume, im Falle eines Doppelhakens zwei Aufnahmeräume auf, so können Elemente der Fixiereinrichtung in einem oder in mehreren oder in allen Aufnahmeräumen, bspw. in beiden Aufnahmeräumen des Doppelhakens, angebracht sein.

Die Fixiereinrichtung kann auch bezeichnet werden: als Zentriereinrichtung, welche die Verbindungsstelle im Aufnahmeraum zentriert, oder als Seitenführungsanordnung, welche die Verbindungsstelle seitlich, also entlang des Seilringes bzw. in Umfangsrichtung des Schwungmattenabschnitts, an welchem der Seilhaken befestigt ist, stützt, sodass diese im entsprechenden Aufnahmeraum fixiert ist.

Der vorliegenden Erfindung liegt die Erkenntnis zugrunde, dass ein Seilring derart in den Seilhaken eingehängt werden kann, dass die mindestens eine Verbindungsstelle im entsprechenden Aufnahmeraum durch die Fixiereinrichtung fixiert ist gegen seitliches Verrücken im Gebrauch. Man könnte auch sagen, dass die mindestens eine Verbindungsstelle im ersten Ende des Seilringes angeordnet ist und das erste Ende des Seilringes gegen seitliche Bewegung entlang des Seilringes im entsprechenden Aufnahmeraum fixiert ist. Durch diese Fixierung kann eine optimierte Bespannung erreicht werden, insbesondere ein besseres Schwingungsverhalten und eine erhöhte Lebensdauer.

Sind nun bspw. zwei Verbindungsstellen im Seilring vorhanden, so kann die eine Verbindungsstelle vorzugsweise im ersten und die andere Verbindungsstelle im zweiten Ende des Seilringes angeordnet sein und somit können durch die Fixiereinrichtung eine der oder gar beide Verbindungsstellen fixiert werden. Grundsätzlich können natürlich auch mehr als zwei Verbindungsstellen im Seilring vorgesehen sein, bevorzugt sind jedoch Seilringe mit einer oder zwei Verbindungsstellen. Der erfindungsgemässe Vorteil ergibt sich jedenfalls bereits, wenn mindestens eine der Verbindungsstellen in einem Aufnahmeraum des Seilhakens gegen seitliches Verrücken entlang des Seilrings, also in Seilrichtung, erfindungsgemäss fixiert ist, was verhindert, dass diese Verbindungsstelle in der Zugstrecke ist oder beim Gebrauch in diese wandert und so die oben beschriebenen Nachteile bewirkt.

Das Verrücken in Seilrichtung kann auch als seitliches Verrücken bezeichnet werden; man kann es als Bewegung beschreiben, welche zur Folge hat, dass das entsprechende Ende im Aufnahmeraum des sich in Spannenlage befindlichen Seilringes durch einen anderen Abschnitt desselben Seilringes - nämlich jenen Abschnitt, der in den Aufnahmeraum bewegt wird - gebildet wird. In anderen Worten: Verrücken oder Bewegen in Seilrichtung meint eine Bewegung des Seilrings entlang des im Seilhaken eingehängten Abschnitts des Seilrings. Als Folge der Fixierung der Verbindungsstelle im entsprechenden Aufnahmeraum des Seilhakens ist die mindestens eine fixierte Verbindungsstelle nicht in einer der Zugstrecken des eingespannten Seilringes angeordnet, sondern im Aufnahmeraum des Seilhakens festgestellt. Dadurch kann gewährleistet werden, dass alle vier Zugstrecken des Seilringes ähnlichere oder gar gleiche elastische Eigenschaften aufweisen, was zu einer symmetrischeren oder symmetrischen Belastung des Seilringes und damit zu geringerem Verschleiss und besserem Schwingungsverhalten führt.

Der Seilring ist vorzugsweise elastisch ausgebildet. Vorzugsweise ist der Seilring ein Gummiseilring.

Die "*proximale Seite*" des Seilhakens ist also jene, an welcher der Befestigungsabschnitt angeordnet ist, dessen "*distale Seite"* jene, an welcher der Aufnahmeabschnitt angeordnet ist. Entsprechend ist die "*Proximalrichtung"* die Richtung vom Aufnahmeabschnitt zum Befestigungsabschnitt; die "*Distalrichtung"* ist die Gegenrichtung zur Proximalrichtung. Das seitliche Verrücken, oder eben in Seilrichtung, kann auch als laterales Verrücken bezeichnet werden, wobei die Lateralrichtung senkrecht zur Proximal-/Distalrichtung steht und in der Ebene der eingespannten, unbenutzten Schwungmatte liegt.

Um den Seilring nun einzuspannen, wird dieser typischerweise langgezogen, sodass sich zwei im Wesentlichen parallele Seilringabschnitte nähern, während sich die anderen zwei Seilabschnitte, welche die parallel liegenden langen Abschnitte verbinden, voneinander entfernen. Dieser längliche Ring wird dann von aussen um den Trampolinrahmen geschlungen, sodass ein Abschnitt des Trampolinrahmens den Seilring mittig kontaktiert und die Längsform des Seilringes in eine U-Form überführt wird. Im Kontext der vorliegenden Anmeldung verweist der Ausdruck "*Ende des Seilringes"* auf einen Abschnitt des Seilringes, welcher diese parallelen Seilringabschnitte endseitig verbindet. Im Bild der U-Form sind die "Enden des Seilringes" als die freien Enden der U-Form zu verstehen, der Trampolinrahmenabschnitt kontaktiert den Boden dieser U-Form von innen, liegt also zwischen den Schenkeln der U-Form. Die beiden Enden des Seilringes liegen sich in der Regel diametral bezüglich des Ringes gegenüber.

Im Kontext der vorliegenden Anmeldung ist der Ausdruck "*Verbindungsstelle"* als jener Abschnitt des Seilringes zu verstehen, an welchem das oder die Seilstücke, welche den Ring bilden, paarweise miteinander verbunden sind. Diese Verbindung kann verschiedenartig ausgestaltet sein. Vorzugweise kann die Verbindungsstelle durch eine Klammer gebildet sein. Der Seilring ist aus mindestens einem Seilstück gebildet und weist mindestens eine Verbindungsstelle auf. Weist ein Seilring bspw. zwei Verbindungsstellen auf, sind diese vorzugsweise an diametral gegenüberliegenden Ringabschnitten angeordnet, sodass jede Verbindungsstelle in einem Ende des Seilringes zwecks Einhängen in den entsprechenden Aufnahmeraum angeordnet sein kann und dann mindesten eine, vorzugsweise beide Verbindungsstellen erfindungsgemäss durch die Fixiereinrichtung gesichert werden können.

Im Rahmen der vorliegenden Anmeldung ist unter dem Ausdruck "*Zugstrecke",* ein Seilringabschnitt gemeint, welcher sich frei zwischen dem Seilhaken und dem Trampolinrahmen erstreckt.

Die vorliegende Erfindung bezieht sich vorzugsweise auf ein Minitrampolin. Solche Minitrampoline werden üblicherweise mit einem Durchmesser von 100 Zentimeter bis 150 Zentimeter angeboten. Ihre Schwungmatte ist typischerweise 20 Zentimeter bis 35 Zentimeter über dem festen Boden positioniert. Derartige Geräte werden zur Erzielung von positiven Impulsen zur persönlichen Gesundheitsförderung, zur Entspannung und für physiotherapeutische Übungen genutzt. Die Benutzungsart kann mit Wippen, Schwingen und leichtem Springen umschrieben werden. Üblicherweise bleiben dabei die Füsse nahe bei der Mattenebene - d.h. Minitrampoline sind für Sprunghöhen von 10 Zentimeter bis 40 Zentimeter ausgelegt. Beim normalen Gebrauch resultieren Belastungsspitzen im Bereich von 2.5- bis 3.5-fachen der Erdbeschleunigung. Minitrampoline werden meist zuhause respektive in Räumen genutzt. Sie werden oft mehrfach am Tag aufgestellt oder verschoben. Aus dieser Anwendungsanforderung ergibt sich der Zwang zu leichten und dennoch stabilen Konstruktionen. Das Gewicht von Minitrampolinen sollte 10 Kilogramm bis 15 Kilogramm nicht überschreiten, sonst ist der Kundennutzen deutlich eingeschränkt. Optimaler Nutzen würde bedingen, dass die Geräte praktisch geräuschlos funktionieren, weil Geräusche von der Konzentration auf die Körperhaltung ablenken und damit den präventiv-therapeutischen Nutzen abschwächen. Es können jedoch auch andere Trampolinarten, wie etwa ein Gartentrampolin, mit den erfindungsgemässen Mitteln verbessert werden.

Vorzugsweise ist die Fixiereinrichtung nun derart ausgestaltet, dass der Seilring im Bereich der mindestens einen Verbindungsstelle auf einer Aussenseite des Seilringes kontaktiert wird. Der Ausdruck "*im Bereich der mindestens einen Verbindungsstelle"* meint hier, dass der Kontaktbereich, an welchem die Fixiereinrichtung den Seilring in Spannlage kontaktiert, nahe an der entsprechend zu fixierenden Verbindungsstelle angeordnet ist. Dies kann bspw. heissen, dass der Kontaktbereich weniger als ein Durchmesser des Seiles des Seilrings, oder in einer alternativen Formulierung weniger als ein Viertel bis die Hälfte eines Durchmessers des Aufnahmeabschnittes, von der Verbindungsstelle entfernt ist. In den Ausführungsformen, in welchen die Verbindungsstelle durch eine Klammer gebildet wird, ist der Ort der Klammer als Verbindungsstelle zu verstehen, da dort die entsprechenden Seilabschnitte zusammengeklemmt sind. Somit kann die Klammer bei in Spannlage liegender Trampolinbespannung weniger als ein Seildurchmesser, oder in einer alternativen Formulierung weniger als ein Viertel bis die Hälfte eines Durchmessers des Aufnahmeabschnittes, vom Kontaktbereich der Fixiereinrichtung entfernt sein. Vorzugsweise wird dieser Kontakt von aussen in einem Bereich hergestellt, welcher in Spannlage proximal der Verbindungsstelle liegt. Dadurch ist ein optimaler Hebel zur Feststellung der Verbindungsstelle im Aufnahmeraum bereitgestellt. Beispielsweise können erfindungsgemäss die Endabschnitte von Seilstücken, welche den Seilring bilden, in die gleiche Richtung schauend mittels der Klammer zusammengeklemmt werden. Nach dem Einhängen des entsprechenden Endes des Seilringes, in welchem diese durch die Klammer definierte Verbindungsstelle liegt, zeigen diese beiden von der Verbindungsstelle sich erstreckenden Endabschnitte mit ihren freien Enden aus dem Aufnahmeraum des Seilhakens in Richtung des Befestigungsabschnittes, also in die Proximalrichtung. In diesem Zusammenhang meint der Ausdruck "*Verrücken in Seilrichtung"* ebenfalls ein laterales Verrücken; mit der Seilrichtung ist dann die entsprechende Richtung des Seilringes und nicht der in Proximalrichtung zeigenden freien Enden gemeint; die Bewegungsrichtung des Verrückens in Seilrichtung ist in diesem Fall also senkrecht zu den freien Endabschnitten, entlang des Ringes. Diese freien Enden können durch mindestens ein, vorzugsweise zwei oder mehr, plattenartig oder säulenartig ausgebildete und von ausserhalb des Seilringes am selben angreifende Seitenführungselemente, welche quer zur Längserstreckung der freien Enden der Seilstücke und quer zur Distalrichtung vom Übergangsabschnitt abragen, kontaktiert werden. Das Seitenführungselement kann auch als Fixierelement bezeichnet werden. Das Seitenführungselement weist eine entsprechende Wange zur Kontaktierung des Seilringes auf. Dadurch, dass die Fixiereinrichtung nahe an der Verbindungsstelle von aussen stützend und in diesem Beispiel proximal der Verbindungsstelle an diesen Endabschnitten angreift, kann eine kurze Bauweise des Seilhakens realisiert werden. Es ist hier natürlich auch denkbar, dass zusätzlich oder alternativ ein oder mehrere solcher Seitenführungselemente so angeordnet sind, dass sie im Einbauzustand distal der Verbindungsstelle liegen und den Seilring von aussen kontaktieren. Das Seitenführungselement ist ein Element, welches eine Wange zum die Verbindungsstelle im Aufnahmeraum fixierendenden Kontakt mit dem Seilring im Bereich der Verbindungsstelle bereitstellt.

Alternativ oder zusätzlich kann die Fixiereinrichtung den Seilring im Bereich der mindestens einen Verbindungsstelle auf einer Innenseite des Seilringes kontaktieren. Auch hier ist der Ausdruck "*im Bereich der mindestens einen Verbindungsstelle"* so zu verstehen, dass der Kontaktbereich, in welchem die Fixiereinrichtung die Innenseite des Seilringes kontaktiert, bspw. weniger als ein Seildurchmesser des Seilringes beträgt. Dazu könnte entweder ein bspw. vom Übergangsabschnitt abragendes flaches Führungselement zwischen die freien Enden der oben beschriebenen Endabschnitte platziert werden, insbesondere so, dass es proximal der Klammer in Einbaulage liegt. Zusätzlich oder alternativ ist jedoch auch denkbar, dass die Fixiereinrichtung diesen Kontakt der Innenseite des Seilringes auf der distalen Seite der Verbindungsstelle ausführt, an welcher die beiden Endabschnitte sich zum Umlaufen des Aufnahmeabschnittes voneinander wegerstrecken. In diesem Bereich ist dann ein Vorsprung, welcher sich vom Aufnahmeabschnitt in die proximale Richtung in den Raum zwischen den Seilabschnitten gegen die Verbindungsstelle erstreckt, vorgesehen. Dieser Vorsprung kann sich jedoch zusätzlich oder alternativ auch vom Übergangsabschnitt wegerstrecken. Die Fixiereinrichtung weist also einen Vorsprung in der Gestalt eines Kammes auf, der sich in Längsrichtung des Aufnahmeabschnittes (also quer zur Proximalrichtung und quer zur Längserstreckung des Befestigungsabschnittes) mittig auf der proximalen, zum Befestigungselement hingerichteten Seite des Aufnahmeabschnittes erstreckt.

Um die Grössen noch besser in Relation zu setzen, kann bspw. der Durchmesser des Aufnahmeabschnittes zwei bis vier Seildurchmesser, vorzugsweise drei Seildurchmesser, des Seilringes betragen eine Länge des Aufnahmeabschnittes kann etwa gleich lang sein wie ein Durchmesser des Aufnahmeabschnittes. Der Befestigungsabschnitt steht mit seiner Längsrichtung vorzugsweise senkrecht und über den Übergangsabschnitt beabstandet zum Aufnahmeabschnitt. Hierbei kann eine Längserstreckung des Befestigungsabschnittes derart gewählt sein, dass der Befestigungsabschnitt den Seilhaken seitlich zu beiden Seiten überragt. Der Befestigungsabschnitt kann also länger sein als der Aufnahmeabschnitt hoch ist.

Die Fixiereinrichtung kann als eine Struktur mit einem oder mehreren Elementen angesehen werden, welches den Seilring abschnittsweise im Bereich der Verbindungsstelle kontaktiert und dadurch eine Führung bzw. eine Feststellung oder Fixierung des Seilrings in einer bestimmten Position ermöglicht, so dass die Verbindungsstelle in Spannlage beim bestimmungsgemässen Gebrauch fixiert ist. Durch diese Festsetzung des Seilringes kann verhindert werden, dass sich die Verbindungsstelle in eine der Zugstrecken bewegt, wodurch sich die nachteilige Wirkung, die im Zusammenhang mit dem Standes der Technik beschrieben wurde, nämlich die asymmetrische Belastung der verschiedenen Zugstrecken, verhindern lässt.

Vorzugsweise ragt der Vorsprung nach Anspruch 1 in Richtung des Übergangsabschnittes vom Aufnahmeelement ab.

Dieser Vorsprung ist dann vorzugsweise länglich ausgebildet, also kammartig, und verläuft entlang der Längserstreckung des Aufnahmeabschnittes im Aufnahmeraum. Hierbei ragt der Kamm vorzugsweise in Richtung des Befestigungsabschnitts, also in Proximalrichtung ab. Der Kamm ragt vorzugsweise etwa um bis zu einem halben Seildurchmesser vom Aufnahmeabschnitt ab. Vorzugsweise verjüngt sich der Kamm in Richtung der Abtragungshöhe und weist ein gerundetes freies Ende auf. Wird nun ein Seilringende in den Aufnahmeabschnitt mit dem Kamm eingehängt, wobei die Endabschnitte des Seilstückes, das denn Seilring bildet, in die gleiche Richtung ragend zusammengeklemmt sind und die Verbindungsstelle über den Kamm gestülpt wird, so treibt der Vorsprung bzw. der Kamm die verbundenen Seilabschnitte keilartig aus Distalrichtung etwas seitlich, also in Seilrichtung, auseinander, greift formschlüssig bezüglich der seitlichen Richtungen in den Seilring ein und stützt oder fixiert somit die Verbindungsstelle gegen Verrutschen in Seilrichtung, also in lateraler Richtung.

In bestimmten Ausführungsformen kann die Fixiereinrichtung zwei oder mehr Seitenführungselemente pro Aufnahmeraum umfassen, welche die mindestens eine Verbindungsstelle des Seilrings zu beiden Seiten einfassen. Damit wird die Verbindungsstelle in Seilrichtung, also in Richtung des Seilringes, gehalten.

In einigen Ausführungsformen ist der Seilhaken als Einzelhaken ausgebildet und weist einen Einzelaufnahmeraum zum gemeinsamen Einhängen des ersten Endes des Seilringes und zweiten Endes des Seilringes auf. In Spannlage ist bevorzugt, wenn der Einzelhaken nach unten offen liegt. Dadurch ist bspw. die Verletzungsgefahr bei der Benutzung minimiert.

In einer bevorzugten Ausführungsform ist der Seilhaken als Doppelhaken ausgebildet und weist einen ersten Aufnahmeraum für das Einhängen des ersten Endes der Seilschlaufe und einen zweiten Aufnahmeraum für das Einhängen des zweiten Endes des Seilrings auf. Vorzugsweise sind der erste Aufnahmeraum und der zweite Aufnahmeraum durch den Übergangsabschnitt voneinander getrennt. Der Übergangsabschnitt und Befestigungsabschnitt können gemeinsam eine Lasche bilden, wie dies in der EP 2 540 352 offenbart ist. Hierbei weist die Lasche mit einem Schlitz zur Durchführung eines flexiblen Bandelementes zwecks Befestigung an der Schwungmatte auf. Anstelle des Schlitzes ist auch ein Hakenelement möglich. Allgemeiner ist natürlich möglich, dass der Übergangsabschnitt gerade ausgebildet ist und einen anderen Befestigungsabschnitt aufweist.

Das Bandelement kann auch als Schlaufe bezeichnet werden und kann flexibel, insbesondere aus mindestens einem Textil, bspw. einem Gewebe, und/oder mindestens einer Folie oder einem Verbund derselben bestehen.

Gemäss einer Ausführungsform ist die Fixiereinrichtung nur im ersten oder zweiten Aufnahmeraum des Doppelhakens angeordnet oder diesem zugeordnet. Diese Ausführungsform ist besonders vorteilhaft im Zusammenspiel mit einem Seilring, welcher lediglich eine Verbindungsstelle aufweist. Es ist dann nämlich möglich, dass das erste Ende des Seilringes mit der Verbindungsstelle in den einen Aufnahmeraum mit der Fixiereinrichtung eingehängt wird und dort gegen Bewegung in Seilrichtung gesichert ist. Das zweite Ende des Seilringes, welches keine Verbindungsstelle aufweist, also ein durchgehendes Seilstück ist, wird dann in den zweiten Aufnahmeraum des Doppelhakens eingehängt, in welchem keine Fixiereinrichtung angeordnet ist. Eine Fixiereinrichtung im anderen Aufnahmeraum wäre in dieser Konstellation unnötig oder gar störend, da ein Anliegen des durchgehenden Seilabschnittes auf dem Kamm zu einer lokal vergrösserten Druckbelastung auf das Seil führen würde, was den durchgehenden Seilabschnitt im zweiten Aufnahmeraum einer grösseren Belastung und damit einer frühzeitigen Beschädigung preisgeben würde; das Anbringen von Seitenführungselementen wäre unnötig und materialintensiv ohne Vorteil. In einen solchen Seilhaken kann also grundsätzlich jeder Seilring mit mindestens einer Verbindungsstelle vorteilhaft eingespannt werden.

In einer weiteren Ausführungsform ist die Fixiereinrichtung sowohl im ersten Aufnahmeraum als auch im zweiten Aufnahmeraum des Doppelhakens angeordnet. Diese Ausführungsform ist besonders vorteilhaft mit einem Seilring, welcher zwei (also eine erste und eine zweite) Verbindungsstellen aufweist, wobei eine erste Verbindungsstelle am ersten Ende des Seilringes und eine zweite Verbindungsstelle am zweiten Ende des Seilringes angeordnet sind. Diese ersten und zweiten Verbindungsstellen liegen sich diametral über den Seilring gegenüber. Die erste Verbindungsstelle wird dann in den ersten Aufnahmeraum mit einer Fixiereinrichtung eingehängt und eben dort durch diese Fixiereinrichtung fixiert und das zweite Ende des Seilringes mit der zweiten Verbindungsstelle wird in den zweiten Aufnahmeraum des Doppelhakens eingehängt und ebendort mit dem oder den dort vorhandenen Elementen Fixiereinrichtung gegen Verrutschen in Seilrichtung gehalten.

In einer Weiterbildung weist der Aufnahmeabschnitt zumindest auf einer, vorzugsweise auf beiden Endseiten bezüglich seiner Längserstreckung ein Abdeckelement auf, welches den zugeordneten Aufnahmeraum nach oben begrenzt. Das Abdeckelement bildet einer Art Deckel, der ein unbeabsichtigtes Aushängen des Seilringes verhindert, wobei das Abdeckelement die Fixiereinrichtung zumindest teilweise überdeckt. Hierbei kann das Abdeckelement insbesondere den allenfalls vorhandenen kammartigen Vorsprung am Aufnahmeabschnitt überdecken.

Der Seilhaken ist vorzugsweise aus Kunststoff hergestellt, bspw. ein Spritzgussteil oder ein 3D-Druckerzeugnis sein. Insbesondere kann der Seilhaken einstückig ausgebildet sein.

Der Befestigungsabschnitt kann als Lasche mit Schlitz, wie in der EP 2 540 352 gezeigt, ausgebildet sein, wobei ein Bandelement durch diesen Schlitz geschlungen wird.

Der Befestigungsabschnitt ist vorzugsweise so ausgebildet, dass das mindestens eine Bandelement, vorzugsweise die zwei Bandelemente, eingehängt (und entsprechend wieder ausgehängt) werden können. Daraus ergeben sich die Vorteile, dass der Seilhaken zum einen austauschbar ist, im Defektfall also eine einfache Abhilfe möglich ist, und zum anderen ergibt sich der produktionstechnische Vorteil, dass in der Produktion die Seilhaken nicht bereits beim Vernähen oder Befestigen der Bandelemente an der Schwungmatte befestigt werden müssen. Nimmt man nämlich die in der EP 2 540 352 vorgeschlagene Befestigungstechnik, so ist der Seilhaken fest mit der Schwungmatte über das Bandelement vernäht und als solches nicht austauschbar. Zudem ergibt sich bei der Produktion der Befestigung nach EP 2 540 352 der Nachteil, dass die produzierten und noch nicht eingehängten Matten nicht gut stapelbar sind, da die Seilhaken bereits befestigt sind. Mit den zum Einhängen ausgebildeten Befestigungsabschnitten ist es jedoch möglich, dass die Seilhaken sowohl in den Seilring als auch in das flexible Bandelement eingehängt werden können, womit also jeder Seilhaken austauschbar ist und in der Produktion erst bei der definitiven Verspannung der Schwungmatte mit dem Trampolinrahmen eingehängt werden muss. Entsprechend ist natürlich denkbar, dass man einen solchen zum Einhängen ausgebildeten Befestigungsabschnitt auch mit dem Seilhaken der EP 2 540 352 kombiniert, dort also die geschlitzte Lasche weglässt und den Befestigungsabschnitt zum Einhängen, wie hierin beschrieben, verwendet.

Diesem Aspekt liegt die Erkenntnis zugrunde, dass durch am Befestigungselement vorgesehene Hakenelemente für die Bandelemente eine Lösbarkeit der Seilhaken von den Bandelementen und damit von der Sprungmatte bereitgestellt ist.

Vorzugsweise wird das mindestens eine Hakenelement, insbesondere die genau zwei Hakenelemente, des Seilhakens einseitig durch den Übergangsabschnitt begrenzt. Vorzugsweise sind allfällige Seitenführungselemente so angeordnet, dass sie sich im begrenzenden Abschnitt des Übergangsabschnitts senkrecht vom Übergangsabschnitt wegerstrecken und so das entsprechende Hakenelement zusätzlich nach innen, also zum Übergangsabschnitt hin, begrenzen. Entsprechend überlappen sich dann das Hakenelement und das oder die entsprechenden Seitenführungselemente, oder allgemeiner, die Fixiereinrichtung.

Vorzugsweise ist der Befestigungsabschnitt flach ausgebildet. Das erlaubt ein einfaches Einhängen und gewährleistet die nötige Stabilität.

Bei einer Doppelhakenkonstruktion liegt der Befestigungsabschnitt vorzugsweise in der Ebene des Übergangsabschnittes. Vorzugsweise liegen beim eingespannten Seilhaken mit zwei Hakenelementen die zwei entsprechenden Bandelemente in der Ebene des Übergangsabschnittes.

Besonders bevorzugt wird ein Befestigungsabschnitt mit stromlinienförmigem Querschnitt. Der Befestigungsabschnittsquerschnitt kann also die Form eines Tragflächenprofils aufweisen, wobei die Profilnase die Distalkante und die Profilhinterkante die Proximalkante des Befestigungsabschnittes bildet.

Die Distalkante des Befestigungsabschnittes kann gerade oder allgemeiner im Wesentlichen der Krümmung des angrenzenden Umfanges der Schwungmatte folgend ausgebildet sein, sodass die Zugrichtung der eingehängten Bandelemente in Spannlage senkrecht zum angrenzenden Umfang verläuft. Die Distalkante kann also bei einer kreisrunden Schwungmatte im Wesentlichen dem Kreisbogen des angrenzenden Umfanges der Schwungmatte folgen. Dies erlaubt eine radial Ausrichtung der Bandelemente bezüglich der Schwungmatte und damit einen optimale Krafteintrag die Schwungmatte.

Die Proximalkante des Befestigungsabschnittes kann gerade oder mit einem Mittelbereich in die Distalrichtung gekrümmt ausgebildet sein. Diese konvexe Krümmung der Proximalkante erlaubt eine optimale Kraftübertragung.

Vorzugsweise ist das mindestens eine Hakenelement, insbesondere die genau zwei Hakenelemente, zum Aufnahmeabschnitt hin gerichtet. Damit kann das entsprechende Bandelement gegen den Aufnahmeabschnitt und bei nach aussen offenen Hakenelementen nach innen bzw. bei nach innen offenen Hakenelementen nach aussen, also zum Übergangsabschnitt hin bzw. vom Übergangsabschnitt weg, über das Hakenelement gehoben und eingehängt werden.

In den Ausführungsformen mit zwei Hakenelementen, in welchen die Hakenelemente nach innen offen sind, sind die Öffnungen der Hakenelemente gegeneinander gerichtet und die Bandelemente können von innen eingehängt werden. In den Ausführungsformen, in welchen die Hakenelemente nach aussen offen sind, sind die Öffnungen der Hakenelemente voneinander weggerichtet und die Bandelemente können von aussen eingehängt werden.

Vorzugsweise ist der Aufnahmeraum des Hakenelements zum Aufnahmeraum des Aufnahmeabschnitts hin gerichtet. Man könnte auch sagen, dass der(die) Hakenabschnitt(e) für den Seilring und der(die) Hakenabschnitte für das(die) Bandelement(e) gegeneinander gerichtet sind.

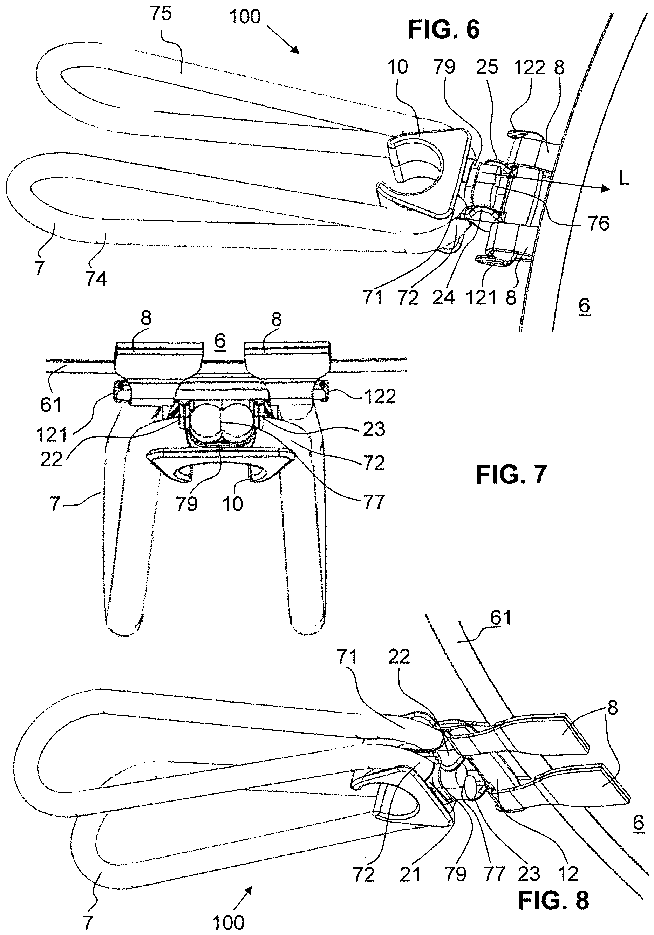

Besonders bevorzugt wird ein Befestigungsabschnitt mit zwei endseitig bezüglich seiner Längserstreckung angeordneten Hakenelementen für jeweils ein Bandelement. Vorzugsweise sind die Hakenelemente derart beabstandet, dass in Spannlage die Zugrichtung jedes Bandelements und die Zugrichtungen von jeweils zwei entsprechenden Zugstrecken des Seilringes im Wesentlichen entgegengesetzt sind (s. bspw. Fig. 7: Das rechte Bandelement liegt im Wesentlichen in der Verlängerung der aufeinander zulaufenden rechten zwei Zugstrecken und das linke Bandelement liegt im Wesentlichen in der Verlängerung der aufeinander zulaufenden linken zwei Zugstrecken des Seilrings). Vorzugsweise sind die Distalkante des Übergangsabschnitts und/oder die Befestigung der Bandelemente an der Schwungmatte so ausgebildet, dass diese Zugrichtungen des Bandelements und der entsprechenden Zugstrecken möglichst genau entgegengesetzt ist.

Zum Einhängen weisen die Bandelemente vorzugsweise Schlaufen oder Öffnungen oder andere Elemente auf oder sind insbesondere direkt als Schlaufen ausgebildet.

In einem weiteren Aspekt, welcher die oben genannte Aufgabe alleine löst, aber besonders vorteilhaft mit den anderen Aspekten der vorliegenden Erfindung kombinierbar ist, betrifft die vorliegende Erfindung ein Verfahren, bei welchem die Bandelemente direkt an der Schwungmatte befestigt, insbesondere vernäht sind, wobei dann die Seilhaken in diese Bandelemente eingehängt werden, nachdem letztere befestigt sind. Dies kann dadurch bewerkstelligt werden, dass Seilhaken verwendet werden, welche ein Einhängen des mindestens einen Bandelements erlauben. Dies wird durch das Vorsehen mindestens eines der oben beschriebenen Hakenelemente erreicht. Besonders bevorzugt sind hier Ausführungsformen, bei welchen genau zwei Bandelemente, die vorzugsweise vorab mit der Schwungmatte verbunden werden, am Befestigungsabschnitt eines Seilhakens eingehängt werden. Dadurch wird eine besonders günstige Zuglastverteilung auf die Schwungmatte erreicht.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht auf ein Trampolin;
- Fig. 2: eine perspektivische Ansicht auf eine erste Ausführungsform eines erfindungsgemässen Seilhakens;
- Fig. 3: eine erste perspektivische Ansicht auf eine zweite Ausführungsform eines erfindungsgemässen Seilhakens;
- Fig. 4: eine zweite perspektivische Ansicht auf die zweite Ausführungsform gemäss Fig. 3;
- Fig. 5: eine perspektivische Ansicht auf eine dritte Ausführungsform eines erfindungsgemässen Seilhakens;
- Fig. 6: eine perspektivische Ansicht von oben auf den Seilhaken gemäss Fig. 5 mit einem eingespannten Seilring (der Trampolinrahmen ist nicht gezeigt) und mit eingehängten Bandelementen, welche an der Schwungmatte befestigt sind;
- Fig. 7: das Befestigungssystem (Seilhaken, Seilring, Bandelemente) nach Figur 6 in einer proximalen ersten perspektivischen Ansicht von unterhalb der Schwungmatte;
- Fig. 8: das Befestigungssystem nach Figuren 6 und 7 in einer zweiten perspektivischen Ansicht von unten;
- Fig. 9: den Seilhaken gemäss der Figuren 3, 4, 6-8 mit Seilring in Spannlage in einer proximalen Ansicht;
- Fig. 10: eine seitliche Ansicht des Seilhakens gemäss Fig. 2 mit eingespanntem Seilring;
- Fig. 11: eine perspektivische Ansicht von oben aus proximaler Richtung des Gegenstandes nach Fig. 10;
- Fig. 12: eine perspektivische Ansicht von proximal unten des Seilhakens gemäss Fig. 3 mit eingespanntem Seilring;
- Fig. 13a,b,c: in verschiedenen Ansichten eine vierte Ausführungsform des erfindungsgemässen Seilhakens;
- Fig. 14: in einer perspektivischen Ansicht aus distaler Richtung die vierte Ausführungsform gemäss Fig. 13 mit eingespanntem Seilring und eingehängten Bandelementen;
- Fig. 15: eine Ansicht einer fünften Ausführungsform des erfindungsgemässen Seilhakens;
- Fig. 16: in einer perspektivischen Ansicht aus distaler Richtung den Gegenstand gemäss Figur 15;
- Fig. 17: eine Ansicht auf eine sechste Ausführungsform des erfindungsgemässen Seilhakens mit eingespanntem Seilring und eingehängten Bandelementen;
- Fig. 18: eine perspektivische Ansicht aus distaler Richtung des Gegenstandes gemäss Fig. 17;
- Fig. 19: eine weitere Ausführungsform des erfindungsgemässen Seilhakens;
- Fig. 20,21: eine abermals andere Ausführungsform des erfindungsgemässen Seilhakens; und
- Fig. 22: ein Detail eines Hakenelements eines Seilhakens nach einem der Figuren 2 bis 12.

### BESCHREIBUNG BEVORZUGTER AUSFÜHRUNGSFORMEN

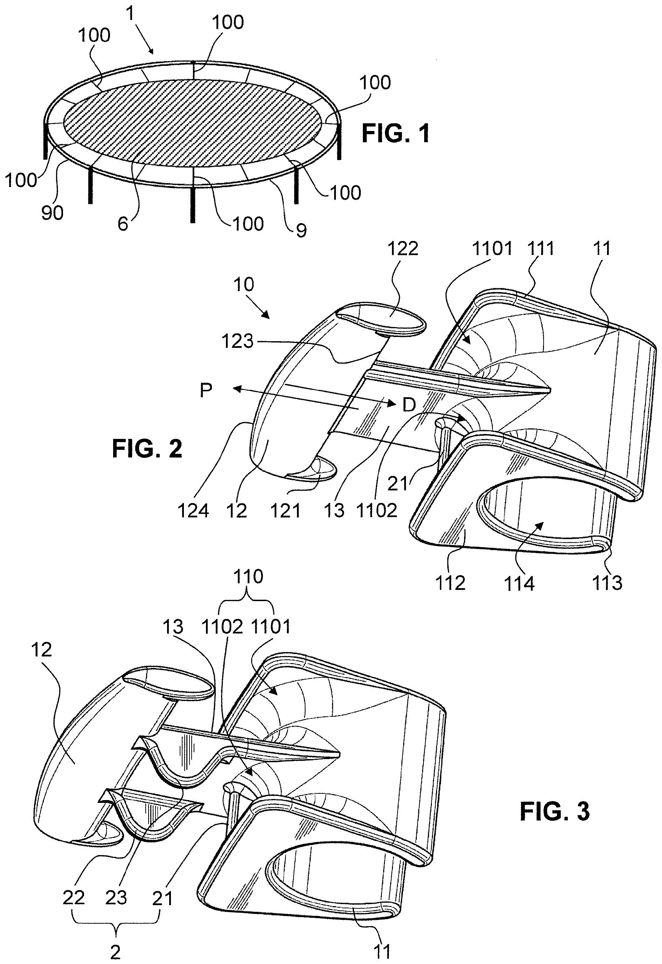

Bevorzugte Ausführungsformen werden nun anhand der Figuren 1 bis 21 beschrieben. Zwischen den verschiedenen Ausführungsformen werden gleichwirkende Merkmale mit den gleichen Bezugszeichen bezeichnet.

Die **Figur 1** zeigt ein Trampolin 1 mit einem Trampolinrahmen 9, an welchem Beine befestigt sind, und mit einer Schwungmatte 6, welche mittels eines Befestigungssystems 100 im Trampolinrahmen 9 eingespannt ist. Das Befestigungssystem 100 umfasst eine Vielzahl von Seilhaken 10, Seilringen 7 und Bandelementen 8 (s. unten). Hierbei sind jeweils die Seilringe 7 um einen entsprechenden Abschnitt 90 des Trampolinrahmens 9 geschlungen und mit Enden distal in einen entsprechenden Seilhaken 10 eingehängt. Auf der proximalen Seite des Seilhakens 10 sind die Bandelemente 8 jeweils mit einem Ende befestigt, insbesondere eingehängt, wobei die Bandelemente 8 mit dem gegenüberliegenden Ende jeweils fest an der Schwungmatte 6 befestigt sind.

Grundsätzlich sind auch Befestigungssysteme 100 denkbar, welche ohne solche Bandelemente 8 auskommen. Beispielsweise kann der Seilhaken 10 direkt an der Schwungmatte 6 befestigt sein.

**Figur 2** zeigt eine erste Ausführungsform eines Seilhakens 10 nach der vorliegenden Erfindung. Der Seilhaken 10 weist einen Aufnahmeabschnitt 11, einen Befestigungsabschnitt 12 und einen zwischengeordneten, den Aufnahmeabschnitt 11 und den Befestigungsabschnitt 12 verbindenden Übergangsabschnitt 13 auf. Der Seilhaken 10 ist ist als Doppelhaken mit einem ersten Aufnahmeraum 1101 zur Aufnahme eines ersten Endes 71 des Seilringes 7 und einem zweiten Aufnahmeraum 1102 zur Aufnahme von einem zweiten Ende 72 des Seilringes 7 ausgebildet.

Der Aufnahmeabschnitt 11 ist zylindrisch ausgestaltet und weist einen kreiszylindrischen Grundkörper 113 mit einer zentralen Ausnehmung 114 auf. Im distalen Bereich, d.h. fern des Befestigungsabschnittes 12, ist ein Teil des Grundkörpers 113 ausgenommen, sodass der Hohlraum 114 in Distalrichtung D offen ist. Sowohl Hohlraum als auch die offene Ausbildung in Distalrichtung D erlauben eine Einsparung von Material und damit eine leichte Ausbildung des Seilhakens 10. Eine gleichmässige Wandstärke ist zudem vorteilhaft für Spritzgussteile.

Die Form eines geraden, hohlen Kreiszylinders erlaubt, dass der ersten und der zweite Aufnahmeraum 1101, 1102 jeweils eine optimale Anlage des ersten bzw. zweiten Endes 71, 72 des Seilringes 7 finden. Das erste und zweite Ende 71, 72 liegt dann jeweils entlang eines Teilkreisumfanges in dem jeweiligen Aufnahmeraum 1101, 1102 am Grundkörper 113 an. Hierbei ist der Durchmesser des Grundkörpers 113 so gewählt, dass eine optimale Anlage bei minimalem Stresseintrag in das Seilmaterial gewährleistet ist.

Der Grundkörper 113 ist zu beiden Seiten bezüglich seiner Längserstreckung (also entlang der Zylinderachse), welche der Einfachheit halber im Kontext der beigefügten Figuren als oben und unten bezeichnet werden, mit einem ersten Abdeckelement 111 und einem zweiten Abdeckelement 112 abgedeckt. Einzelhaken sind in der Spannlage jedoch vorzugsweise so orientiert, dass sie nach unten offen sind. Die deckelartigen Abdeckelemente 111, 112 überragen den Grundkörper 113 in Proximalrichtung P, d.h. in Richtung des Befestigungsabschnittes 12. Somit begrenzen die Abdeckelement 111, 112 den ersten bzw. zweiten Aufnahmeraum 1101 bzw. 1102 nach oben bzw. nach unten und sichern Eingehängtes. Die Abdeckelemente 111, 112 weisen im Distalbereich eine Breite auf, welche im Wesentlichen der Breite des Grundkörpers 113 entspricht und verbreitern sich in Proximalrichtung P zunehmend. Eine solche Verbreiterung ist nicht zwingend notwendig, eine gleichbleibende Breite oder eine Verschmälerung ist ebenfalls denkbar; die diversen beigefügten Figuren zeigen unterschiedliche Ausgestaltungen der Abdeckelemente, welche beliebig kombinierbar sind.

Mittig bezüglich der Längserstreckung des Grundkörpers 113 ragt der Übergangsabschnitt 13 gerade in Proximalrichtung P vom Grundkörper 113 ab. Hierbei ist der Übergangsabschnitt 13 etwas schmaler ausgebildet als der Aussendurchmesser des Grundkörpers 113 an der Ansatzstelle des Übergangsabschnittes 13. Die Ansatzstellenabschnitte des Übergangsabschnittes 13 am Aufnahmeabschnitt 11 sind vorzugsweise gerundet ausgebildet. So wird verhindert, dass dem Seilring 7 abrieberzeugende Kanten entgegenstehen. Zudem verjüngt sich der Übergangsabschnitt 13 in Proximalrichtung P um 5% bis 20 %; auch dies hilft Material einzusparen. Der Übergangsabschnitt 13 ist gerade und im Wesentlichen plattenförmig ausgebildet, seine Längserstreckung ist also parallel zur Proximalrichtung P.

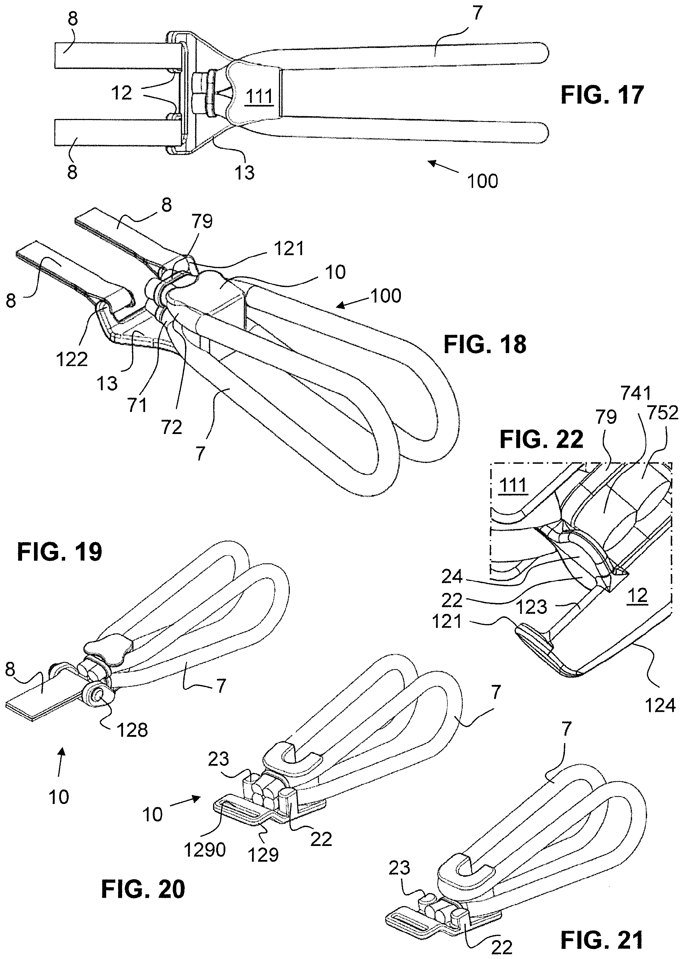

Am proximalen Ende des Übergangsabschnitts 13 ist der Befestigungsabschnitt 12 angeordnet, welcher senkrecht zur Längserstreckung des Grundkörpers 113 und zur Längserstreckung des Übergangsabschnitts 13 verläuft. Der Befestigungsabschnitt 12 ist endseitig bezüglich seiner Längserstreckung mit einem ersten Hakenelement 121 bzw. einem zweiten Hakenelemente 122 versehen. Diese Hakenelemente 121, 122 sind nach aussen offen und werden durch Plattenelemente nach aussen abgeschlossen, welche endseitig bezüglich der Längserstreckung am Befestigungselement 12 angebracht sind und dieses Distalrichtung D um 2 bis 5 Millimeter, insbesondere 3 Millimeter überragen. Hierbei beträgt eine Distanz zwischen diesen Plattenelementen und dem parallel verlaufenden Übergangsabschnitt 13, also eine Breite eines Aufnahmeraums der Hakenelemente 121, 122, bspw. 10 bis 20 Millimeter, insbesondere etwa 12 Millimeter. Der Aufnahmeraum der Hakenelemente 121, 122 ist innen, also zum Übergangsabschnitt 13 hin, durch den Übergangsabschnitt 13 begrenzt. Wie bspw. Fig. 22 im Detail zeigt, begrenzen allfällige Seitenführungselemente 22 bis 25 (nur 22, 25 gezeigt) diesen Aufnahmeraum der Hakenelemente 121, 122 zusätzlich senkrecht zum Übergangsabschnitt 13. Das entsprechende Bandelement 8, welches in einen Aufnahmeraum eines Hakenelements 121, 122 eingehängt wird, weist dann eine distale Breite von 1 bis 5 Millimeter, bspw. 2 Millimeter, weniger als die Distanz zwischen dem entsprechenden Plattenelement und dem Übergangsabschnitt 13 auf. Der Befestigungsabschnitt 12 kann eine Länge von 45 bis 55 Millimeter, bspw. von 50 Millimeter aufweisen. Die übrigen Grössen ergeben sich für bevorzugte Ausführungsformen aus den Figuren, welche im Wesentlichen verhältnistreue Darstellungen sind. Der Befestigungsabschnitt 12 weist eine mittig nach aussen, also konvex gekrümmte Proximalkante 124 (s. Figuren 2 & 22) auf; eine Abmessung des Befestigungsabschnittes 12 in Proximalrichtung P kann mittig beispielsweise etwa 10 Millimeter betragen und zu den seitlichen Enden hin um etwa 20 % abnehmen. Die Distalkante 123 (s. Figuren 2 & 22) ist gerade ausgebildet.

Es ist auch denkbar, dass die Distalkantenabschnitte in den zwei Aufnahmeräumen der Hakenelemente 121, 122 winklig zueinander verlaufen oder gekrümmt ausgebildet sind, sodass sie im Wesentlichen einem zugeordneten Umfangsabschnitt der Schwungmatte 6 folgen. Dies erlaubt insbesondere im Fall einer kreisrunden Schwungmatte 6 eine radiale Ausrichtung der Bandelemente 8, was eine optimale Verteilung der Zugkraft erlaubt.

Zudem kann der Aufnahmeabschnitt 11 samt Abdeckelementen 111, 112 so geformt sein, dass die Zugkräfte der zwei auf der Seite eines Bandelements 8 liegenden Zugstrecken des Seilringes 7 der Zugkraft dieses Bandelements 8 im Wesentlichen entgegengesetzt verlaufen (s. bspw. Fig. 7), was eine optimale Kraftübertragung durch den Seilhaken 10 erlaubt.

Zwischen dem Abdeckelement 112 und dem Übergangsabschnitt 13, also im zweiten Aufnahmeraum 1102, ist ein Vorsprung 21 vorgesehen, welcher sich vom Übergangsabschnitt 13 entlang des Grundkörpers 113 bis zum Abdeckelement 112 erstreckt. Der Vorsprung 21 ist als Kamm ausgebildet, welcher eine Materialstärke von 1 bis 4 Millimeter und eine Abragungshöhe vom Grundkörper 113 von 1 bis 5 Millimeter aufweist. In Richtung seines freien Endes verjüngt sich der Vorsprung 21 vorzugsweise um 5 bis 20 %. Das freie Ende ist gerundet ausgebildet. Der Vorsprung 21 bildet in dieser ersten Ausführungsform des Seilhakens 10 die Fixiereinrichtung 2, welche es erlaubt, dass der Seilring 7 mit einer Verbindungsstelle 77 im zweiten Aufnahmeraum 1102 fixiert ist. Im Übrigen hat der Vorsprung 21 den weiteren Vorteil, dass der Seilhaken 10 strukturell stabilisiert wird.

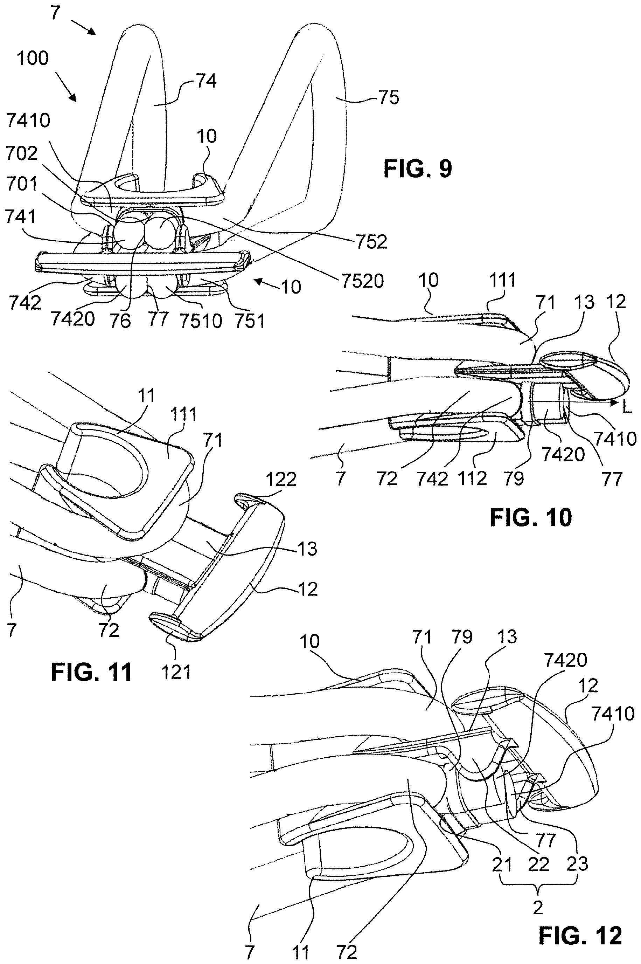

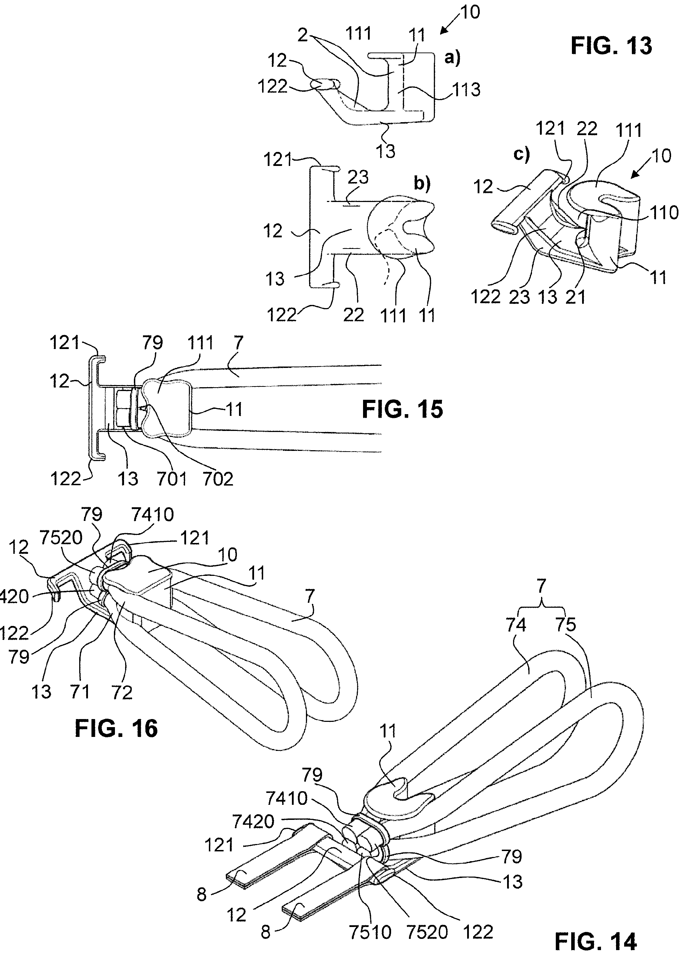

**Figuren 10** und **11** zeigen die erste Ausführungsform des Seilhakens 10 nach Figur 2 mit eingespanntem Seilring 7. Das erste Ende 71 des Seilringes 7 ist in den ersten Aufnahmeraum 1101 und das zweite Ende 72 des Seilringes 7 in den zweiten Aufnahmeraum 1102 eingehängt. Der Seilring 7 ist aus einem einzigen Seilstück 74 hergestellt, wobei Endabschnitte 741, 742 des Seilstückes 74 freie Enden 7410, 7420 aufweisen. Die Endabschnitte 741 und 742 sind mittels einer Klammer 79 zusammengeklemmt, sodass die ringfern, also proximal, der Klammer 79 angeordneten freien Enden 7410 und 7420 in die gleiche Richtung schauen. Der Vorsprung 21 greift von einer Innenseite 702 des Seilringes 7 (s. Figuren 9 und 14) keilartig zwischen die Endabschnitte 741, 742 und stellt so diese Endabschnitte 741, 742 und damit die Verbindungsstelle 77 im zweiten Aufnahmeraum 1102 gegen Verrücken beim bestimmungsgemässen Gebrauch in Seilrichtung fest.

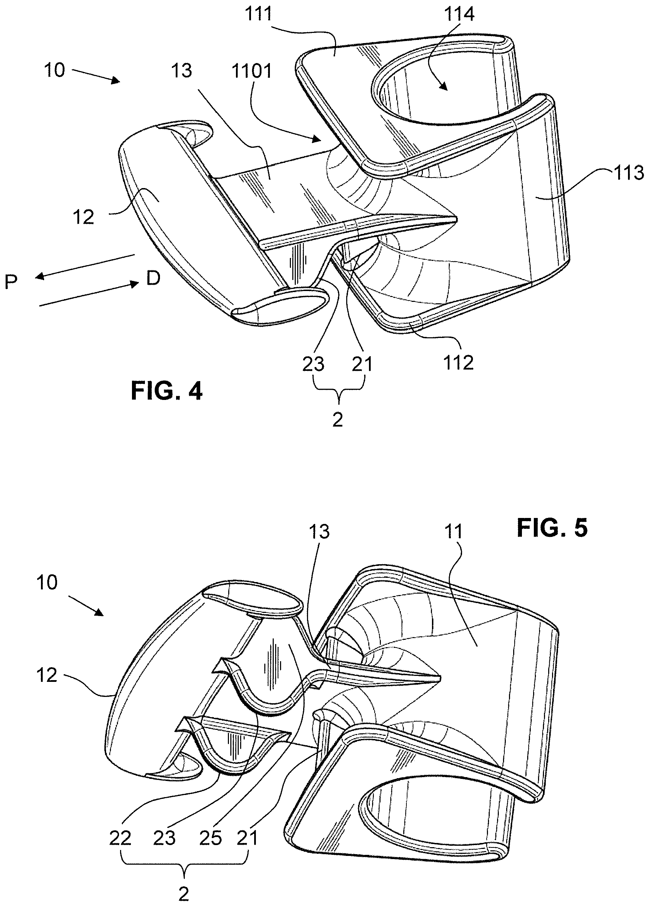

**Figur 3** und **Figur 4** zeigen eine zweite Ausführungsform des Seilhakens 10, welche eine Weiterbildung des Seilhakens 10 gemäss der Figur 2 darstellt. Die zweite Ausführungsform weist zusätzlich zum Vorsprung 21 die Seitenführungselemente 22 und 23 auf, welche seitlich im proximalen Bereich des Übergangsabschnittes 13 angeordnet sind und in Richtung der Längserstreckung des Aufnahmeabschnittes 11 vom Übergangsabschnitt 13 abragen. Die Seitenführungselemente 22, 23 sind flügelartige Gebilde, welche sich senkrecht von einer zum zweiten Aufnahmeraum 1102 hin gerichteten Oberfläche des Übergangsabschnitts 13 wegerstrecken. Die Seitenführungselemente 22, 23 sind weiter plattenförmig ausgebildet, stehen im Wesentlichen parallel zu den die Hakenelemente 121, 122 bildenden Plattenelementen randseitig auf dem Übergangsabschnitt 13 und weisen eine gausskurvenförmige Aussenform auf. Die Anordnung und Höhe der Seitenführungselemente 22, 23 ist so gewählt, dass die freien Enden 7410, 7420, wie in der **Figur 12** gezeigt, zwischen den Seitenführungselementen 22, 23 festgestellt sind, da die Seitenführungselemente 22, 23 diese freien Enden 7110, 7420 auf deren Aussenseite 701 und so die Verbindungsstelle 77 zusätzlich gegen Verrücken in Seilrichtung feststellt. Somit ist die Fixiereinrichtung 2 aus dem Vorsprung 21 und den Seitenführungselementen 22, 23 gebildet. Im ersten Aufnahmeraum 1101 sind keine Elemente der Fixiereinrichtung 2 angeordnet.

Die Seitenführungselemente 22, 23 können auch säulenartig, wie in Figuren 20, 21 gezeigt, ausgebildet sein.

Bei den Ausführungsformen gemäss der Erfindung sind entweder die Seitenführungselemente 22, 23 vorgesehen und/oder der Vorsprung 21.

Die erste und die zweite Ausführungsform des Seilhakens 10 sind entsprechend besonders geeignet für Seilringe 7, welche lediglich eine Verbindungsstelle 77 aufweisen.

**Figur 5** zeigt eine dritte Ausführungsform des Seilhakens 10, welche eine Weiterbildung der zweiten Ausführungsform darstellt. Bei dieser Ausführungsform weist die Fixiereinrichtung 2 nun nicht nur Elemente im zweiten Aufnahmeraum 1102, sondern auch Führungselemente im ersten Aufnahmeraum 1101 auf. Gemäss der dargestellten Ausführungsform ist ein weiterer kammartiger Vorsprung 21 im ersten Aufnahmeraum 1101 analog wie im zweiten Aufnahmeraum 1102 vorgesehen. Überdies sind weitere flügelartige Seitenführungselemente 24, 25, welche gleich wie die vorgenannten Seitenführungselemente 22, 23 ausgebildet sind, im ersten Aufnahmeraum 1101 vorgesehen. Die weiteren Seitenführungselemente 24, 25 sind so angeordnet, dass sie im Wesentlichen ein Spiegelbild der vorgenannten Seitenführungselemente 22, 23 bezüglich einer Ebene durch den Übergangsabschnitt 13 bilden.

Der weitere Vorsprung 21 und die weiteren Seitenführungselemente 24, 25 wirken gleich wie der vorgenannte Vorsprung 21 und die vorgenannten Seitenführungselemente 22, 23. Entsprechend ist die dritte Ausführungsform des Seilhakens 10 besonders geeignet für Seilringe 10 mit zwei Verbindungsstellen 76, 77.

Natürlich können wieder einzelne Elemente der Fixiereinrichtung 2 weggelassen werden.

In den **Figuren 6 bis 8** ist ein Befestigungssystem aus einem Seilhakens 10 gemäss der dritten Ausführungsform, einem Seilring 7 mit zwei Verbindungsstellen 76, 77 und zwei Bandelementen 8 dargestellt, wobei die Bandelemente 8 an der Schwungmatte 6 befestigt sind.

Der Seilring 7 weist ein erstes Seilstück 74 und ein zweites Seilstück 75 auf. Das erste Seilstück 74 weist einen ersten Endabschnitt 741 mit einem ersten freien Ende 7410 und einen zweiten Endabschnitt 742 mit einem zweiten freien Ende 7420 auf. Das zweite Seilstück 75 weist einen ersten Endabschnitt 751 mit einem ersten freien Ende 7510 und einen zweiten Endabschnitt 752 mit einem zweiten freien Ende 7520 auf (s. **Figur 9**). Der erste Endabschnitt 741 des ersten Seilstückes 74 ist mit dem zweiten Endabschnitt 752 des zweiten Seilstückes 75 über eine Klammer 79 derart verbunden, dass das erste freie Ende 7410 des ersten Seilstückes 74 und das zweite freie Ende 7520 des zweiten Seilstückes 75 in die gleiche Richtung schauen und eine erste Verbindungsstelle 76 gebildet ist. Der zweite Endabschnitt 742 des ersten Seilstückes 74 ist mit dem ersten Endabschnitt 751 des zweiten Seilstückes 75 über eine Klammer 79 derart verbunden, dass das zweite freie Ende 7420 des ersten Seilstückes 74 und das erste freie Ende 7510 des zweiten Seilstückes 75 in die gleiche Richtung schauen und eine zweite Verbindungsstelle 77 gebildet ist. Der Seilring 7 ist nun derart in die dritte Ausführungsform des Seilhakens 10 eingespannt, dass die erste Verbindungsstelle 76 im ersten Aufnahmeraum 1101 und die zweite Verbindung stelle 77 im zweiten Aufnahmeraum 1102 angeordnet ist. Erneut greifen die Vorsprünge 21 von innen bezüglich des Seilringes 7 zwischen die jeweiligen Endabschnitte 741, 752 bzw. 742, 751 und die Seitenführungselemente 22, 23 bzw. 24, 25 von aussen bezüglich des Seilringes 7 auf die jeweiligen freien Enden 7410, 7520 bzw. 7420, 7510, sodass die gebildete Fixiereinrichtung 2 die beiden Verbindungsstellen 76 und 77 gegen Verrücken in Seilrichtung in den jeweiligen Aufnahmeräumen 1101, 1102 feststellt.

Die Figuren 6 bis 8 zeigen zudem, wie die flexiblen Bandelemente 8 in den Hakenelementen 121, 122 eingehängt sind und an der Schwungmatte 6 von unten insbesondere durch Nähen befestigt sind. Wie aus Figur 7 ersichtlich ist, ist es bevorzugt, wenn die Bandelemente 8 derart an der Unterseite der Schwungmatte 6 befestigt sind, dass deren Längserstreckung in radialer Richtung bezüglich der Schwungmatte verläuft. So ist eine optimale Zuglasteinleitung in die Schwungmatte 6 gewährleistet. Zudem ist die Ausgestaltung vorzugsweise so, dass das rechte Bandelement 8 im Wesentlichen in der Verlängerung der aufeinander zulaufenden rechten zwei Zugstrecken in Fig. 7 und das linke Bandelement 8 im Wesentlichen in der Verlängerung der aufeinander zulaufenden linken zwei Zugstrecken des Seilrings 7 in Fig. 7 liegen. Dadurch ist die Zugrichtung des jeweiligen Bandelementes 8 und der zugeordneten Zugstrecken jeweils vorteilhaft entgegengerichtet. Auch der Übergangsabschnitt 13 und die Abdeckelemente 111, 112 sind vorzugsweise so ausgerichtet, dass diese Entgegenrichtung der Zugrichtungen optimal ist.

Deshalb kann der Befestigungsabschnitt 12 der Seilhaken 10 gemäss aller Ausführungsformen bei zumindest abschnittsweise runden Schwungmatten 6 auch leicht gewinkelt ausgebildet sein; seine Distalkante kann also im Abschnitt, in welchem das jeweilige Bandelement 8 anliegt, senkrecht zur Längserstreckung des Bandelements 8 verlaufen. Bei leicht gewinkelt zueinander verlaufenden Bandelementen 8 weist die entsprechende Distalkante ebenfalls einen entsprechend winkligen Verlauf der entsprechenden Abschnitte auf.

Überdies ist aus Figuren 7 und 8 exemplarisch ersichtlich, dass die Bandelemente 8 für alle Ausführungsformen im Bereich des Kontaktes mit der Schwungmatte 6, also radial innen bezüglich eines die Schwungmatte 6 nach aussen begrenzendes Randeinfassbandes 61 der Schwungmatte 6, verbreitert ausgebildet sein können. Durch diese verbreitete Ausbildung ist eine optimale Befestigung, bspw. mittels Vernähen und/oder Verkleben und/oder Vernieten und/oder Verschweissen, möglich, während die schmalere Ausgestaltung im freien Endbereich der Bandelemente 8, welche in die Hakenelemente 121, 122 eingehängt werden, eine entsprechende Flexibilität dieser Endbereiche zulässt, um das Einhängen zu erleichtern. Es ist natürlich auch denkbar, dass die Bandelemente 8 anders an der Schwungmatte 6 befestigt sind.

**Figuren 13a****, b und c** zeigen eine vierte Ausführungsform des erfindungsgemässen Seilhakens 10, welche jedoch nicht als Doppelhaken, sondern nun als Einzelhaken mit nur einem Aufnahmeraum 110 ausgebildet ist. Erneut weist der Seilhaken 10 einen Aufnahmeabschnitt 11, einen Befestigungsabschnitt 12 und einen den Aufnahmeabschnitt 11 von den Befestigungsabschnitt 12 verbindenden Übergangsabschnitt 13 auf. Der Übergangsabschnitt 13 ist jedoch nicht mehr gerade ausgebildet, verläuft also nicht mehr von einer Mitte bezüglich der Längserstreckung des Grundkörpers 113 in Proximalrichtung P, sondern setzt am unteren Ende des Grundkörpers 113 an, verläuft über etwa die Hälfte seiner Längserstreckung parallel zur Proximalrichtung und biegt dann über einen Biegebereich nach oben, sodass das Befestigungselement 12 etwa auf der Höhe der Mitte in Längsrichtung des Grundkörpers 113 zu liegen kommt. Im Biegebereich sind die Seitenführungselemente 22, 23 seitlich am Übergangsabschnitt 13 angeordnet. Diese Seitenführungselemente 22, 23 sind hier nicht mehr als gausskurvenförmige Flügel oder Säulen ausgebildet, sondern verlaufen als Seitenwände im Biegebereich. Von der Funktion her bieten sie jedoch gleich wie die vorherigen Ausführungsformen seitliche Kontaktflächen für eine Aussenfläche 701 der freien Enden der Endabschnitte des Seilringes 7 zur erfindungsgemässen seitlichen Stützung. Überdies ist erneut ein Kamm 21 vorgesehen, welcher zusammen mit den Seitenführungselemente 22, 23 die Fixiereinrichtung 2 bildet. Dieser kann auch weggelassen oder alleine angeordnet werden.

In der hier abgebildeten Ausführungsform ist ein Abdeckelement 111 vorgesehen, welches nicht mehr trapezförmig wie in den vorgängig beschriebenen Ausführungsformen sondern rund ausgebildet ist. Diese Formen sind jedoch austauschbar, auch sind andere Formen denkbar.

**Figur 14** zeigt die vierte Ausführungsform gemäss Figuren 13a-c mit eingespanntem Seilring 7 und zwei eingehängten Bandelementen 8. Da der Vorsprung 21 über die gesamte Höhe des Aufnahmeraumes 110 verläuft, ist es besonders vorteilhaft, wenn man einen Seilring 7 aus zwei Seilstücken 74, 75 und dementsprechend mit zwei Verbindungsstellen 76, 77 verwendet. Es ist natürlich auch denkbar, dass man den Kamm 21 nur in einem oberen oder unteren Halb- oder Teilraum des Aufnahmeraumes 110 anordnet und einen Seilring 7 verwendet, welcher lediglich eine Verbindungsstelle aufweist. Zudem ist in der Ausführungsform nach den Figuren 13 und 14 ein Befestigungselement 12 gezeigt, welches eine gerade Proximalkante aufweist.

**Figuren 15** und **16** zeigen eine fünfte Ausführungsform des Seilhakens 10, welcher ebenfalls als Einzelhaken ausgebildet ist. In dieser Ausführungsform hat man einen nochmals anders geformten Befestigungsabschnitt 12 gewählt. Zudem weist das Abdeckelement 111 nicht mehr die runde oder trapezförmige Form der vorherig beschriebenen Ausführungsformen auf, sondern zwei seitlich nach aussen abragende, teilweise verbundene Rundscheiben. Im Aufnahmeraum 110 ist ebenfalls ein Vorsprung 21 vorgesehen, welcher zwischen die Endabschnitte 741, 752 und 742, 751 greift vorgesehen. Weitere Seitenführungselemente sind hier nicht vorgesehen, womit die Fixiereinrichtung 2 lediglich durch den Vorsprung 21 gebildet ist. Es ist jedoch denkbar, Seitenführungselemente vorzusehen.

**Figuren 17** und **18** zeigen eine sechste Ausführungsform des Seilhakens 10, welche sich durch die Ausgestaltung des Befestigungsabschnittes 12 von der fünften Ausführungsform unterscheidet. In allen vorherig beschriebenen Ausführungsformen sind die Hakenelemente 121, 122 nach aussen offen, d.h. die Bandelemente 8 können von aussen über den Befestigungsabschnitt geschoben und somit dort sicher eingehängt werden. In der sechsten Ausführungsform ist der Befestigungsabschnitt 12 derart geformt, sodass die Hakenelemente 121, 122 nach ihnen offen sind. Natürlich ist ein derartiger Befestigungsabschnitt 12 auch mit den anderen Ausführungsformen kombinierbar.

**Figur 19** zeigt einen abermals alternativ ausgestalteten Befestigungsabschnitt 12, wobei ein Bolzen 128 vorgesehen ist, welcher es erlaubt, dass ein bereits fertig angenähtes Bandelement 8 nachträglich in den Haken 10 eingehängt wird, indem der Bolzen 128 zuerst entfernt wird, durch das Bandelement 8 geführt wird und dann wieder im Haken 10 festgestellt wird. Es kann ein Vorsprung 21 vorgesehen sein (nicht gezeigt). Die Arme, welche den Bolzen 128 tragen, können hoch ausgestaltet sein und als Seitenführungselement ausgebildet sein, ähnlich wie in Figuren 13a-c.

**Figuren 20** und **21** zeigen alternativ ausgestaltete Seitenführungselemente 22, 23, welche nicht plattenförmig, sondern säulenartig ausgebildet sind. Zudem illustrieren diese Figuren die weitere Idee, eine Höhe der Seitenführungselemente 22, 23 nur so hoch zu wählen, dass entsprechende Endabschnitte seitlich gestützt werden können. Ist bspw. ein Seilring 7 mit zwei Verbindungsstellen vorgesehen (Fig. 20) sind die Seitenführungselemente 22, 23 höher, als wenn ein Seilring 7 mit nur einer Verbindungsstelle vorgesehen ist (Fig. 21). Im letzteren Fall ist dann das Ende des Seilrings 7 mit der Verbindungsstelle unten anzuordnen, wie in Fig. 21 gezeigt.

Zudem zeigen Figuren 20, 21 einen Befestigungsabschnitt 12, welcher als abschnittsweise gebogene Lasche 129 mit endseitigem Schlitz 1290 ausgebildet ist.

In der Ausführungsform nach Fig. 20 ist ein Vorsprung 21, wie oben beschrieben, vorgesehen. In der Fig. 21 ist ein solcher Vorsprung in einem Teil des Aufnahmeraums des Einzelhakens vorgesehen, in welchem die Verbindungsstelle zu liegen kommt.

Wie in den Figuren gezeigt, kann das Abdeckelement parallel zur Proximalrichtung P verlaufen, insbesondere bei Doppelhaken, oder gegen den Befestigungsabschnitt 12 geneigt verlaufen, insbesondere bei Einzelhaken (s. bspw. Figuren 20, 21).

Im Allgemeinen gilt, dass die verschiedenen Elemente der unterschiedlichen Ausführungsformen untereinander kombinierbar sind.

Wie aus den Figuren weit ersichtlich ist, sind sämtliche Ecken und Kanten der Seilhaken 10 gemäss aller dargestellten Ausführungsformen gerundet ausgebildet. Was eine Verletzungsgefahr bei der Benutzung vermindert und verhindert, dass der Seilring 7 bei der Benutzung Schaden nimmt.

**BEZUGSZEICHENLISTE**

| | | | |
|---|---|---|---|
| 1 | Trampolin | 7 | Seilring |
| 10 | Seilhaken | 701 702 | Aussenseite von 7 Innenseite von 7 |
| 100 | Befestigungssystem | 71 72 | erstes Ende von 7 zweites Ende von 7 |
| 11 | Aufnahmeabschnitt | 74 | erstes Seilstück von 7 |
| 110 | Aufnahmeraum | 741 | erster Endabschnitt von 74 |
| 1101 | erster Aufnahmeraum | 7410 | freies Ende von 741 |
| 1102 | zweiter Aufnahmeraum | 742 | zweiter Endabschnitt von 74 |
| 111 | erstes Abdeckelement | 7420 | freies Ende von 742 |
| 112 | zweites Abdeckelement | 75 | zweites Seilstück von 7 |
| 113 | Grundkörper | 751 | erster Endabschnitt von 75 |
| 114 | Ausnehmung in 113 | 7510 752 | freies Ende von 751 zweiter Endabschnitt von 75 |
| 12 | Befestigungsabschnitt | 7520 | freies Ende von 752 |
| 121 | erstes Hakenelement von 12 | 76 | Verbindungsstelle in 71 |
| 122 | zweites Hakenelement von 12 | 77 | Verbindungsstelle in 72 |
| 123 | Distalkante von 12 | 79 | Verbindungselement |
| 124 | Proximalkante von 12 | | |
| 128 | Bolzen | 9 | Trampolinrahmen |
| 129 | Lasche | 90 | Abschnitt von 9 |
| 1290 | Schlitz in 129 | 8 | Bandelement |
| 13 | Übergangsabschnitt | D | Distalrichtung |
| 2 | Fixiereinrichtung | L | Längsrichtung |
| 21 | Vorsprung | P | Proximalrichtung |
| 22 bis 25 | Seitenführungselement | | |
| 6 | Schwungmatte | | |
| 61 | Randeinfassband | | |

## Patentansprüche

1. Seilhaken (10) für einen mindestens eine Verbindungsstelle (76;77) aufweisenden Seilring (7) einer Trampolinbespannung, wobei der Seilhaken (10) einen distalen Aufnahmeabschnitt (11) zur Aufnahme des Seilrings (7) und einen proximalen Befestigungsabschnitt (12) zur Befestigung an einer Schwungmatte (6) umfasst,
wobei der Aufnahmeabschnitt (11) und der Befestigungsabschnitt (12) durch einen Übergangsabschnitt (13) verbunden sind und mindestens ein Aufnahmeraum (110; 1101,1102) zum Einhängen eines ersten Endes (71) und eines zweiten Endes (72) des Seilringes (7) gebildet ist,
wobei der Seilhaken (10) weiter eine Fixiereinrichtung (2) aufweist, welche ausgebildet ist, um während des bestimmungsgemässen Gebrauchs des Seilhakens (10) die mindestens eine Verbindungsstelle (76;77) des Seilrings (7) gegen Verrücken in Längsrichtung des Seils zu halten,
**dadurch gekennzeichnet, dass** die Fixiereinrichtung (2) mindestens einen am Aufnahmeabschnitt (11) angebrachten und in den Aufnahmeraum (110; 1101,1102) ragenden Vorsprung (21) aufweist, welcher ausgebildet und angeordnet ist, um in die mindestens eine Verbindungsstelle (76;77) vorzugsweise von innerhalb des Seilringes (7) einzugreifen.

2. Seilhaken (10) nach Anspruch 1, wobei der mindestens eine Vorsprung (21) in Richtung des Übergangsabschnittes (13) vom Aufnahmeabschnitt (11) abragt.

3. Seilhaken (10) für einen mindestens eine Verbindungsstelle (76;77) aufweisenden Seilring (7) einer Trampolinbespannung, wobei der Seilhaken (10) einen distalen Aufnahmeabschnitt (11) zur Aufnahme des Seilrings (7) und einen proximalen Befestigungsabschnitt (12) zur Befestigung an einer Schwungmatte (6) umfasst,
wobei der Aufnahmeabschnitt (11) und der Befestigungsabschnitt (12) durch einen Übergangsabschnitt (13) verbunden sind und mindestens ein Aufnahmeraum (110;1101,1102) zum Einhängen eines ersten Endes (71) und eines zweiten Endes (72) des Seilringes (7) gebildet ist,
wobei der Seilhaken (10) weiter eine Fixiereinrichtung (2) aufweist, welche ausgebildet ist, um während des bestimmungsgemässen Gebrauchs des Seilhakens (10) die mindestens eine Verbindungsstelle (76;77) des Seilrings (7) gegen Verrücken in Längsrichtung des Seils zu halten,
**dadurch gekennzeichnet, dass** die Fixiereinrichtung (2) mindestens ein Seitenführungselement (22;23;24;25) umfasst, welches an einem seitlichen Rand des Übergangsabschnittes (13), angebracht ist und die mindestens eine Verbindungsstelle (76;77) von ausserhalb oder innerhalb des Seilringes (7) kontaktiert.

4. Seilhaken (10) nach Anspruch 3, bei dem sich das Seitenführungselement (22;23;24;25) vorzugsweise direkt an den Befestigungsabschnitt (12) anschliesst.

5. Seilhaken (10) nach Anspruch 3 oder 4, wobei die Fixiereinrichtung (2) zwei oder mehr Seitenführungselemente (22,23;24,25) umfasst, welche die mindestens eine Verbindungsstelle (76;77) des Seilrings (7) zu beiden Seiten in Längsrichtung des Seils einfassen.

6. Seilhaken (10) nach einem der vorangehenden Ansprüche, welcher als Einzelhaken ausgebildet ist und der Aufnahmeraum ein Einzelaufnahmeraum (110) zum gemeinsamen Einhängen des ersten Endes (71) des Seilringes (7) und zweiten Endes des Seilringes (72) ist.

7. Seilhaken (10) nach einem der Ansprüche 1 bis 6, welcher als Doppelhaken ausgebildet ist und zwei Aufnahmeräume vorgesehen sind, wobei ein erster Aufnahmeraum (1101) für das Einhängen des ersten Endes (71) der Seilschlaufe (7) und ein zweiter Aufnahmeraum (1102) für das Einhängen des zweiten Endes (72) des Seilrings (7) gebildet sind, wobei der erste Aufnahmeraum (1101) und der zweite Aufnahmeraum (1102) durch den Übergangsabschnitt (13) voneinander getrennt sind.

8. Seilhaken (10) nach Anspruch 7, wobei der Übergangsabschnitt (12) gerade ausgebildet ist.

9. Seilhaken (10) nach Anspruch 7 oder 8, wobei die Fixiereinrichtung (2) nur im ersten oder zweiten Aufnahmeraum (1101; 1102) des Doppelhakens angeordnet ist oder nur diesem zugeordnet ist.

10. Seilhaken (10) nach einem der Ansprüche 1 bis 9, wobei die Fixiereinrichtung (2) sowohl im ersten Aufnahmeraum (1101) als auch im zweiten Aufnahmeraum (1102) des Doppelhakens angeordnet ist oder diesem zugeordnet ist.

11. Seilhaken (10) nach einem der vorhergehenden Ansprüche, wobei der Befestigungsabschnitt (12) in die Distalrichtung (D) ein, zwei oder mehr offene Hakenelemente (121,122) für das Einhängen jeweils eines Bandelementes (8) zwecks Befestigung an der Schwungmatte (6) aufweist, welche vorzugsweise teilweise mit der Fixiereinrichtung (2) überlappen.

12. Seilhaken (10) nach einem der vorangehenden Ansprüche, wobei der Aufnahmeabschnitt (11) zumindest ein Abdeckelement (111;112) aufweist, wobei das Abdeckelement (111;112) die Fixiereinrichtung (2) vorzugsweise zumindest teilweise überdeckt.

## Claims

1. A cable hook (10) for a cable loop (7) of a trampoline covering having at least one connection point (76;77), wherein the cable hook (10) comprises a distal receiving section (11) for receiving the cable loop (7) and a proximal fastening section (12) for fastening to a trampoline mat (6),
wherein the receiving section (11) and the fastening section (12) are connected by a transition section (13) and at least one receiving space (110;1101,1102) is formed for hooking a first end (71) and a second end (72) of the cable loop (7),
wherein the cable hook (10) further comprises a fixing means (2) adapted to hold the at least one connection point (76;77) of the cable loop (7) against displacement in the longitudinal direction of the cable during intended use of the cable hook (10),
**characterized in that** the fixing means (2) comprises at least one projection (21) attached to the receiving section (11) and projecting into the receiving space (110;1101,1102), which projection (21) is constructed and arranged to engage in the at least one connecting point (76;77) preferably from inside the cable loop (7).

2. The cable hook (10) according to claim 1, wherein the at least one projection (21) projects from the receiving section (11) in the direction of the transition section (13).

3. The cable hook (10) for a cable loop (7) of a trampoline covering having at least one connection point (76;77), wherein the cable hook (10) comprises a distal receiving section (11) for receiving the cable loop (7) and a proximal fastening section (12) for fastening to a trampoline mat (6),
wherein the receiving section (11) and the fastening section (12) are connected by a transition section (13) and at least one receiving space (110;1101,1102) is formed for hooking a first end (71) and a second end (72) of the cable loop (7),
wherein the cable hook (10) further comprises fixing means (2) adapted to hold the at least one connection point (76;77) of the cable loop (7) against displacement in the longitudinal direction of the cable during intended use of the cable hook (10),
**characterized in that** the fixing means (2) comprises at least one lateral guide element (22;23;24;25), which is attached to a lateral edge of the transition section (13) and contacts the at least one connection point (76;77) from outside or inside the cable loop (7).

4. The cable hook (10) according to claim 3, wherein the lateral guide element (22;23;24;25) preferably directly connects to the fastening section (12).

5. The cable hook (10) according to claim 3 or 4, wherein the fixing means (2) comprises two or more lateral guide elements (22,23;24,25) which enclose the at least one connection point (76;77) of the cable loop (7) on both sides in the longitudinal direction of the cable.

6. The cable hook (10) according to one of the preceding claims, which is designed as a single hook and the receiving space is a single receiving space (110) for jointly hooking the first end (71) of the cable loop (7) and second end of the cable loop (72).

7. The cable hook (10) according to one of the claims 1 to 6, which is designed as a double hook and two receiving spaces are provided, wherein a first receiving space (1101) is formed for hooking the first end (71) of the cable loop (7) and a second receiving space (1102) is formed for hooking the second end (72) of the cable loop (7), wherein the first receiving space (1101) and the second receiving space (1102) are separated from each other by the transition section (13).

8. The cable hook (10) according to claim 7, wherein the transition section (12) is formed straight.

9. The cable hook (10) according to claim 7 or 8, wherein the fixing means (2) is arranged only in the first or second receiving space (1101;1102) of the double hook or is associated only therewith.

10. The cable hook (10) according to any one of claims 1 to 9, wherein the fixing means (2) is arranged in or associated with both the first receiving space (1101) and the second receiving space (1102) of the double hook.

11. The cable hook (10) according to one of the preceding claims, wherein the fixing section (12) has, in the distal direction (D), one, two or more open hook elements (121, 122) for hooking in each case one elastic element (8) for the purpose of fixing it to the trampoline mat (6), which preferably partially overlap with the fixing means (2).

12. The cable hook (10) according to one of the preceding claims, wherein the receiving section (11) comprises at least one cover element (111;112), wherein the cover element (111;112) preferably at least partially covers the fixing means (2).

## Revendications

1. Crochet de câble (10) pour une boucle de câble (7) d'une couverture de trampoline ayant au moins un point de connexion (76 ; 77), le crochet de câble (10) comprenant une section de réception distale (11) pour recevoir la boucle de câble (7) et une section de fixation proximale (12) pour la fixation à un tapis de trampoline (6),
dans lequel la section de réception (11) et la section de fixation (12) sont reliées par une partie de transition (13) et au moins un espace de réception (110 ; 1101, 1102) est formé pour accrocher une première extrémité (71) et une seconde extrémité (72) de la boucle de câble (7),
dans lequel le crochet de câble (10) comprend en outre un dispositif de fixation (2) qui est conçu pour maintenir le au moins un point de connexion (76 ; 77) de la boucle de câble (7) contre un déplacement dans la direction longitudinale du câble pendant l'utilisation prévue du crochet de câble (10),
**caractérisé en ce que** le dispositif de fixation (2) comprend au moins une saillie (21) fixée à la section de réception (11) et faisant saillie dans l'espace de réception (110 ; 1101, 1102), laquelle saillie (21) est construite et agencée pour s'engager dans le au moins un point de connexion (76 ; 77) de préférence depuis l'intérieur de la boucle de câble (7).

2. Crochet de câble (10) selon la revendication 1, dans lequel la au moins une saillie (21) fait saillie de la section de réception (11) dans la direction de la section de transition (13).

3. Crochet de câble (10) pour une boucle de câble (7) d'une couverture de trampoline ayant au moins un point de connexion (76 ; 77), le crochet de câble (10) comprenant une section de réception distale (11) pour recevoir la boucle de câble (7) et une section de fixation proximale (12) pour la fixation à un tapis de trampoline (6),
dans lequel la section de réception (11) et la section de fixation (12) sont reliées par une partie de transition (13) et au moins un espace de réception (110 ; 1101, 1102) est formé pour accrocher une première extrémité (71) et une seconde extrémité (72) de la boucle de câble (7),
dans lequel le crochet de câble (10) comprend en outre un dispositif de fixation (2) qui est conçu pour maintenir le au moins un point de connexion (76 ; 77) de la boucle de câble (7) contre un déplacement dans la direction longitudinale de la câble pendant l'utilisation prévue du crochet de câble (10),
**caractérisé en ce que** le dispositif de fixation (2) comprend au moins un élément de guidage latéral (22 ; 23 ; 24 ; 25) qui est fixé à un bord latéral de la section de transition (13) et entre en contact avec le au moins un point de connexion (76 ; 77) depuis l'extérieur ou depuis l'intérieur de la boucle de câble (7).

4. Crochet de câble (10) selon la revendication 3, dans lequel l'élément de guidage latéral (22 ; 23 ; 24 ; 25) se connecte de préférence directement à la section de fixation (12).

5. Crochet de câble (10) selon la revendication 3 ou 4, dans lequel le dispositif de fixation (2) comprend deux ou plusieurs éléments de guidage latéraux (22, 23 ; 24, 25) qui entourent le au moins un point de connexion (76 ; 77) de la boucle de câble (7) des deux côtés dans la direction longitudinale du câble.

6. Crochet de câble (10) selon l'une quelconque des revendications précédentes, qui est conçu comme un crochet unique et l'espace de réception est un espace de réception unique (110) pour accrocher conjointement la première extrémité (71) de la boucle de câble (7) et la deuxième extrémité de la boucle de câble (72).

7. Crochet de câble (10) selon l'une quelconque des revendications 1 à 6, qui est conçu comme un crochet double et deux espaces de réception sont prévus, un premier espace de réception (1101) étant formé pour accrocher la première extrémité (71) de la boucle de câble (7) et un deuxième espace de réception (1102) étant formé pour accrocher la deuxième extrémité (72) de la boucle de câble (7), le premier espace de réception (1101) et le deuxième espace de réception (1102) étant séparés l'un de l'autre par la section de transition (13).

8. Crochet de câble (10) selon la revendication 7, dans lequel la section de transition (12) est de forme droite.

9. Crochet de câble (10) selon la revendication 7 ou 8, dans lequel le dispositif de fixation (2) est disposé dans ou associé uniquement au premier ou au deuxième espace de réception (1101 ; 1102) du crochet double.

10. Crochet de câble (10) selon l'une quelconque des revendications 1 à 9, dans lequel le dispositif de fixation (2) est disposé dans ou associé à la fois au premier espace de réception (1101) et au deuxième espace de réception (1102) du crochet double.

11. Crochet de câble (10) selon l'une quelconque des revendications précédentes, dans lequel la section de fixation (12) comprend, dans la direction distale (D), un, deux ou plusieurs éléments de crochet ouverts (121, 122) pour accrocher un élément de sangle respectif (8) dans le but de le fixer au tapis de trampoline (6), qui de préférence recouvrent partiellement les moyens de fixation (2).

12. Crochet de câble (10) selon l'une quelconque des revendications précédentes, dans lequel la section de réception (11) comprend au moins un élément de recouvrement (111 ; 112), ledit élément de recouvrement (111 ; 112) recouvrant de préférence au moins partiellement le dispositif de fixation (2).
